# DEMANDE DE BREVET EUROPEEN

(11) **EP 3 805 947 A1**
(43) Date de publication de la demande: **14.04.2021**
(21) Numéro de dépôt: 20200694.6
(22) Date de dépôt: 08.10.2020
(51) Int. Cl.: G06F 16/27, G06F 16/23

(54) **PROCÉDÉ DE GESTION D'UNE BASE DE DONNÉES PARTAGÉE PAR UN GROUPE D'APPLICATIONS, PRODUIT PROGRAMME D'ORDINATEUR ET SYSTÈME EMBARQUÉ ASSOCIÉS**

(30) Priorité: 11.10.2019 FR 1911320
(71) Demandeur: THALES, 92400 Courbevoie (FR)
(72) Inventeur: HERNOUST, Thibault, 33700 MERIGNAC (FR); BOUSQUET, Philippe, 33700 MERIGNAC (FR); BERNICOT, Cedric, 33700 MERIGNAC (FR)
(74) Mandataire: Lavoix

(57) **Abrégé**

L'invention concerne un procédé de gestion d'une base de données (9) partagée par un groupe d'applications (6). La base de données comprend des éléments comprenant chacun une valeur et un numéro de version. Chaque application comprend une réplique (8) de la base de données.

Le procédé comprend une étape de modification de la valeur d'un élément dans la réplique d'une application, dite application active, une étape d'incrémentation du numéro de version dudit élément dans ladite réplique de l'application active, une étape de diffusion par l'application active d'une donnée de transmission aux autres applications, la donnée de transmission comprenant l'élément modifié, et un numéro de version antérieure de cet élément modifié, une étape de synchronisation, lors de laquelle au moins une application autre que l'application active met à jour sa réplique en fonction d'une comparaison du numéro de version antérieure avec celui dudit élément dans cette réplique.

## Description

La présente invention concerne un procédé de gestion d'une base de données partagée par un groupe d'applications.

La présente invention concerne également un produit programme d'ordinateur et un système embarqué de gestion de base de données.

Plus particulièrement, la présente invention se situe dans le cadre de la gestion d'une base de données dans un système avionique.

Des procédés de gestion de telles bases de données sont soumis à de nombreuses contraintes, telles que par exemple des contraintes de temps-réel. Ces contraintes présentent par exemple des temps de réponses allant de plusieurs secondes jusqu'à quelques millisecondes selon les chaînes fonctionnelles considérées.

De plus, dans les cas d'application avec des systèmes avioniques, les ressources de calcul et de mémoire nécessaires pour gérer une base de données sont limitées. Ainsi, les procédés de gestion présentent des contraintes de performance élevées, tout en respectant ces ressources de calcul et de mémoire limitées.

Dans les systèmes avioniques, une pluralité de capteurs sont configurés pour fournir des données à des applications distinctes. Ces applications sont configurées pour traiter des données pour mettre à jour une base de données.

En même temps, pour le fonctionnement correct du système avionique, la base de données est contrainte de présenter des données toujours cohérentes et intègres.

Pour cela, on connaît des systèmes comprenant un serveur comportant une base de données centralisée ainsi qu'une pluralité de clients. Chaque client est configuré pour émettre des requêtes de lecture ou d'écriture vers la base de données centralisée. Les requêtes de lecture ou d'écriture de ces clients multiples sont gérées par des mécanismes de transactions prédéterminés.

Cependant, un tel système implique un verrouillage de la base de données tant qu'une transaction (lecture ou écriture) est en cours. Par exemple, un tel système est susceptible à mettre en œuvre un procédé de gestion présentant des étapes suivantes :
- un client de basse priorité effectue une transaction pour modifier une donnée et verrouille donc la base de données centralisée ;
- cette transaction est interrompue par un client de haute priorité qui effectue une transaction pour modifier la même donnée, la donnée étant verrouillée, le client de haute priorité se met en attente ;
- le client de basse priorité reprend la main et termine sa transaction, il lève donc le verrouillage de la base de données ;
- le client de haute priorité reprend la main et termine sa transaction.

On conçoit ainsi que le client de haute priorité termine sa transaction après le client de basse priorité. Ainsi, la transaction du client de haute priorité est ralentie.

Le verrouillage conduit ainsi à un non-respect de la contrainte de temps-réel décrite ci-dessus. En effet, une transaction ne peut pas être effectuée lorsque la base de données est verrouillée par une autre transaction.

On connaît également des procédés de gestion présentant une fréquence de travail fixe afin d'obtenir des délais de traitement souhaités. Cependant, de tels procédés ne peuvent pas satisfaire les contraintes des ressources de calcul et de mémoire limitées.

En conséquence, les procédés de gestion connus ne sont pas entièrement satisfaisants. En particulier, les procédés de gestion connus ne respectent pas l'ensemble des contraintes décrites ci-dessus notamment en ce qui concerne le traitement en temps réel et l'utilisation limitée des ressources de calcul et de mémoire.

Un but de l'invention est ainsi de proposer un procédé de gestion d'une base de données permettant un traitement en temps réel, tout en nécessitant des ressources de calcul et de mémoire relativement faibles.

A cet effet, l'invention a pour objet un procédé de gestion d'une base de données partagée par un groupe d'applications, les applications étant mises en œuvre par un ou plusieurs systèmes embarqués. La base de données comprend des éléments, chaque élément comprenant une valeur et un numéro de version. Chaque application comprend une réplique de la base de données, les répliques étant identiques lors de l'initialisation du procédé. Le procédé de gestion comprend :
- une étape de modification de la valeur d'au moins un élément dans la réplique de la base de données d'une application, dite application active, du groupe d'applications ;
- une étape d'incrémentation du numéro de version dudit élément dans la réplique de la base de données de l'application active ;
- une étape de diffusion lors de laquelle l'application active diffuse une donnée de transmission aux autres applications du groupe d'applications, la donnée de transmission comprenant l'élément modifié lors des étapes de modification et d'incrémentation, et un numéro de version antérieure de cet élément modifié, le numéro de version antérieure étant le numéro de version de cet élément avant la mise en œuvre des étapes de modification et d'incrémentation ;
- une étape de synchronisation, lors de laquelle au moins une application du groupe d'applications autre que l'application active met à jour sa réplique de la base de données en fonction d'une comparaison du numéro de version antérieure avec le numéro de version dudit élément dans cette réplique.

On conçoit que, selon l'invention, chaque application traite les éléments dans sa réplique de la base de données de manière indépendante par rapport aux autres applications. Aussi, les applications sont aptes à mettre à jour la base de données à plusieurs fréquences distinctes. Ainsi, le procédé de gestion permet de garantir un traitement en temps réel.

Le procédé de gestion selon l'invention permet également de garantir, même lors d'une différence des éléments dans les répliques l'un par rapport à l'autre, que l'ensemble des répliques de la base de données sont en cohérence l'une par rapport à l'autre, tout en nécessitant des ressources de calcul et de mémoire faibles. Notamment, le procédé de gestion permet de détecter des incohérences entre les répliques par le numéro de version des éléments.

Suivant d'autres aspects avantageux de l'invention, le procédé de gestion comprend une ou plusieurs des caractéristiques suivantes, prise(s) isolément ou suivant toutes les combinaisons techniquement possibles :
- lors de l'étape de synchronisation, une application autre que l'application active déclare l'élément modifié comme valide si le numéro de version antérieure est égal au numéro de version de cet élément dans sa réplique de la base de données, l'application déclarant l'élément modifié comme invalide dans le cas contraire ;
- ladite application remplace l'élément correspondant dans sa réplique de la base de données par l'élément modifié si cet élément modifié est déclaré comme valide ;
- lorsque l'élément est déclaré comme invalide, ladite application marque la valeur dudit élément comme invalide dans sa réplique de la base de données ;
- lorsque l'élément est déclaré comme invalide, l'application change le numéro de version dudit élément par le numéro de version le plus élevé parmi le numéro de version dans sa réplique de la base de données et le numéro de version compris dans l'élément modifié compris dans la donnée de transmission ;
- le procédé de gestion comprend une étape de correction lors de laquelle une application du groupe d'applications, dite application de correction, calcule la valeur de l'élément déclaré comme invalide pour obtenir au moins un élément corrigé ;
- le procédé de gestion comprend en outre une étape de diffusion additionnelle de l'élément corrigé par l'application de correction aux autres applications du groupe d'applications ;
- chaque réplique de la base de données est exclusivement modifiable par l'application comprenant cette réplique ;
- l'étape de modification est mise en œuvre, pour un élément prédéterminé, par une unique application prédéterminée du groupe d'applications ;
- la valeur d'au moins un élément compris dans chaque réplique de la base de données est une fonction d'une pluralité d'arguments de valeur ;
- lors de l'étape de modification, l'application active modifie un argument de valeur de la pluralité d'arguments de valeur, cet argument de valeur étant associé à l'application active.

L'invention a également pour objet un produit programme d'ordinateur comportant des instructions logicielles qui, lorsque mises en œuvre par un équipement informatique, mettent en œuvre le procédé de gestion tel que décrit ci-dessus.

L'invention a également pour objet un système embarqué de gestion de base de données partagée par un groupe d'applications, les applications étant configurées pour être mises en œuvre par le système embarqué. La base de données comprend des éléments, chaque élément comprenant une valeur et un numéro de version. Chaque application comprend une réplique de la base de données, les répliques étant identiques lors de l'initialisation du système embarqué. Une application, dite application active, du groupe d'applications est configurée pour modifier la valeur d'au moins un élément dans sa réplique de la base de données. L'application active est configurée pour incrémenter le numéro de version dudit élément dans sa réplique de la base de données. L'application active est configurée pour diffuser une donnée de transmission aux autres applications du groupe d'applications, la donnée de transmission comprenant l'élément modifié et incrémenté, et un numéro de version antérieure de cet élément, le numéro de version antérieure étant le numéro de version de cet élément avant sa modification et son incrémentation. Au moins une application du groupe d'applications autre que l'application active est configurée pour mettre à jour sa réplique de la base de données en fonction d'une comparaison du numéro de version antérieure avec le numéro de version dudit élément dans cette réplique.

L'invention a également pour objet un procédé de mise à jour d'une base de données partagée par un groupe d'applications, les applications étant mises en œuvre par un ou plusieurs systèmes embarqués, la base de données comprenant une pluralité d'éléments, chaque élément comprenant une valeur, chaque application comprenant une réplique de la base de données, le procédé comprenant :
- une étape de réception par une application du groupe d'applications, dite application de traitement, d'au moins un élément de la pluralité d'éléments ;
- une étape de comparaison par l'application de traitement de la valeur dudit élément avec la valeur de cet élément dans sa réplique de base de données, et
   lorsque la valeur dudit élément est différente de la valeur de cet élément dans sa réplique de la base de données, le procédé comprenant :
- une étape de détection par l'application de traitement d'une incohérence de la valeur dudit élément par rapport à une valeur attendue dudit élément, l'incohérence étant déterminée conformément au fonctionnement du ou des systèmes embarqués,
- une étape de marquage de la valeur dudit élément comme invalide, ledit élément étant dit élément invalide ;
- une étape de correction de l'élément invalide, lors de laquelle une application du groupe d'applications, dite application de correction, calcule la valeur de l'élément invalide pour obtenir au moins un élément corrigé, et
- une étape de diffusion de l'élément corrigé par l'application de correction aux autres applications du groupe d'applications.

Suivant d'autres aspects avantageux de l'invention, le procédé de mise à jour comprend une ou plusieurs des caractéristiques suivantes, prise(s) isolément ou suivant toutes les combinaisons techniquement possibles :
- le procédé comprend en outre une étape de transmission lors de laquelle l'application de traitement transmet l'élément invalide au moins à l'application de correction ;
- l'application de traitement est l'application de correction. ;
- la valeur marquée comme invalide d'au moins un élément lors de l'étape de marquage est une fonction d'une pluralité d'arguments de valeur ;
- chaque argument de valeur est associé à une application correspondante du groupe d'applications, l'argument de valeur associé à cette application étant modifiable exclusivement par cette application ;
- lors de l'étape de correction, l'application de correction applique une fonction de transfert à la valeur de l'élément invalide pour obtenir une valeur corrigée de l'élément corrigé ;
- la fonction de transfert dépend de plusieurs arguments de transfert ;
- chaque argument de transfert correspond à l'un des arguments de valeur de la pluralité d'arguments de valeur ;
- la valeur marquée comme invalide lors de l'étape de marquage d'au moins un élément est une fonction d'un argument unique ;
- lors de l'étape de correction, les applications redémarrent en initialisant l'argument unique à un argument initial spécifique à chaque élément ;
- chaque argument initial est l'argument de l'élément respectif à un état de la réplique de la base de données dans lequel l'ensemble des éléments est valide ;
- le procédé de mise à jour comprend une étape de sélection de l'application de correction dans le groupe d'applications en fonction d'une charge de travail de chaque application.

L'invention a également pour objet un produit programme d'ordinateur comportant des instructions logicielles qui, lorsque mises en œuvre par un équipement informatique, mettent en œuvre le procédé de mise à jour tel que décrit ci-dessus.

L'invention a également pour objet un système embarqué de mise à jour d'une base de données partagée par un groupe d'applications, les applications étant configurées pour être mises en œuvre par un ou plusieurs systèmes embarqués, la base de données comprenant une pluralité d'éléments, chaque élément comprenant une valeur, chaque application comprenant une réplique de la base de données,
dans lequel une application du groupe d'applications, dite application de traitement est configurée pour recevoir au moins un élément de la pluralité d'éléments,
dans lequel l'application de traitement est configurée pour comparer la valeur dudit élément avec la valeur de cet élément dans sa réplique de base de données, et
dans lequel, lorsque la valeur dudit élément est différente de la valeur de cet élément dans sa réplique de la base de données :
- l'application de traitement est configurée pour détecter une incohérence de la valeur dudit élément par rapport à une valeur attendue dudit élément, l'incohérence étant déterminée conformément au fonctionnement du ou des systèmes embarqués,
- l'application de traitement est configurée pour marquer la valeur dudit élément comme invalide, ledit élément étant dit élément invalide,
- une application du groupe d'applications, dite application de correction, est configurée pour calculer la valeur de l'élément invalide pour obtenir au moins un élément corrigé, et
- l'application de correction est configurée pour diffuser l'élément corrigé aux autres applications du groupe d'applications.

Ces caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est une vue schématique d'un aéronef comprenant un système embarqué selon l'invention ;
- [Fig 2] la figure 2 est un organigramme d'un procédé de gestion mis en œuvre par le système embarqué de la figure 1,
- [Fig 3] la figure 3 est une vue schématique illustrant un exemple d'implémentation du précédé de gestion de la figure 2, et

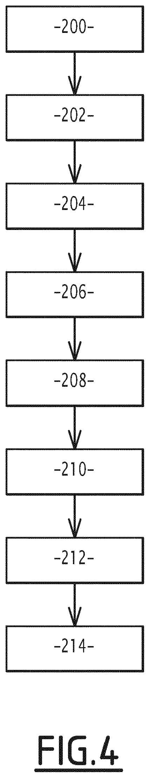

- [Fig 4] la figure 4 est un organigramme d'un procédé de mise à jour d'une base de données, mis en œuvre par le système embarqué de la figure 1.

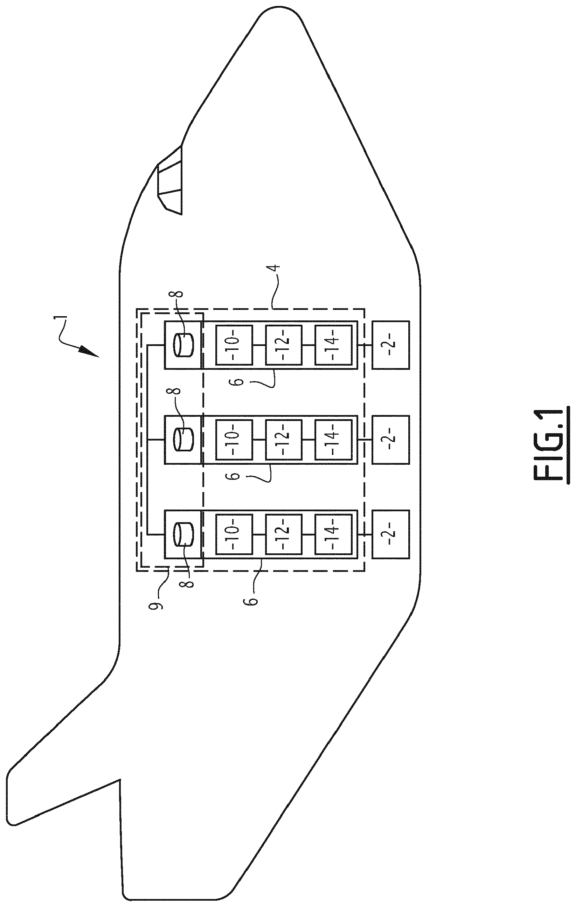

Sur la figure 1, un aéronef 1 comprenant une pluralité de capteurs 2 et un système embarqué 4 est représenté.

Selon une variante non représentée, l'aéronef 1 comprend plusieurs systèmes embarqués 4.

Selon également des variantes non représentées, les capteurs 2 et le système embarqué 4 sont implémentés dans un navire, un véhicule routier ou un véhicule ferroviaire.

Les capteurs 2 sont des capteurs configurés pour mesurer une donnée relative à la situation de l'aéronef, de son environnement ou relative à d'autres aéronefs. Par exemple, les capteurs 2 comprennent au moins un capteur choisi de la liste suivante : un capteur de localisation, un capteur de pression et/ou un capteur de température, un capteur d'images, un capteur audio, un capteur de données satellitaires, un capteur d'aéronefs environnants, tel qu'un capteur d'un système d'alerte de trafic et d'évitement de collision TCAS (de l'anglais « Traffic alert and Collision Avoidance System ») et un capteur météorologique, tel qu'un capteur comprenant un radar météo.

Le système embarqué 4 est configuré pour mettre en œuvre une pluralité d'applications 6.

Chaque application 6 comprend une réplique 8 d'une base de données 9. La base de données 9 est ainsi formée par les répliques 8. La base de données 9 est alors partagée par les applications 6.

Comme visible dans l'exemple de la figure 1, la base de données 9 est dépourvue de base de données centralisée. Notamment, l'ensemble des répliques 8 présentent un niveau hiérarchique égal l'un par rapport à l'autre. Par « niveau hiérarchique égal », il est entendu que des informations d'une réplique 8 quelconque ne prévalent pas aux informations des autres répliques 8.

Chaque application 6 comprend en outre un module d'acquisition 10, un module de traitement 12 et un module de sortie 14.

Chaque application 6 se présente sous la forme d'un calculateur indépendant ou est par exemple intégrée dans un système de gestion de vol (ou FMS de l'anglais « Flight Management System ») de l'aéronef 1, dans un sac de vol électronique (ou EFB de l'anglais « Electronic Flight Bag »), dans un calculateur d'aide à la navigation embarqué et/ou dans tout autre système embarqué existant.

Notamment, chaque module 10, 12, 14 précité de chaque application se présente au moins partiellement sous la forme d'un logiciel exécutable par un processeur et stocké dans une mémoire du calculateur correspondant. Le processeur est par exemple un microprocesseur, notamment du type PowerPC.

Selon un mode de réalisation, chaque application 6 se présente au moins partiellement sous la forme d'un logiciel exécutable par un processeur mono-cœur, par un processeur multi-cœur ou une pluralité de processeurs distincts.

En variante ou en complément, chacun des modules 10, 12, 14 précités se présente au moins partiellement sous la forme d'un dispositif physique, tel que par exemple un circuit logique programmable, tel qu'un FPGA (de l'anglais *Field Programmable Gate Array*)*,* ou encore sous la forme d'un circuit intégré dédié, tel qu'un ASIC (de l'anglais *Application Specific Integrated Circuit).*

Les applications 6 sont notamment configurées pour être exécutées parallèlement, par exemple de manière simultanée. Par exemple, chaque application 6 est configurée pour effectuer des traitements, notamment par les modules 10, 12 et 14, et accéder à sa réplique 8 indépendamment des autres applications 6.

Notamment, chaque application 6 correspond à un fil de travail (ou « thread » en anglais). Chaque application 6 correspond par exemple à un utilisateur potentiel de la base de données 9.

Chaque réplique 8 comprend une pluralité d'éléments. En particulier, chaque réplique 8 comprend le même nombre et les mêmes types d'éléments. Chaque élément comprend une valeur et un numéro de version. De préférence, chaque élément comprend une identification (ou ID) et/ou une information relative au type de l'élément.

La valeur est par exemple une fonction.

Selon un exemple de réalisation, la valeur d'au moins un élément compris dans chaque réplique 8 est une fonction d'un argument unique.

Lorsque la fonction dépend d'un argument unique, des éventuelles conflits entre les répliques 8 sont gérables par une conception spécifique des applications 6. En particulier, une unique application 6 est autorisée à modifier l'argument unique de l'élément concerné. Les autres applications sont uniquement autorisées à mettre à jour la valeur de cet élément en fonction d'une information provenant de cette unique application concernant cet élément.

Par exemple, chaque élément de la base de données 9 qui présente une valeur étant une fonction dépendant d'un argument unique est modifiable par une seule application, spécifique pour l'élément correspondant.

De ce fait, les cas de conflits sont théoriquement impossibles pour les éléments comprend une valeur sous forme d'une fonction d'un argument unique, car chaque élément n'a qu'un seul producteur, à savoir notamment l'application 6 associée à l'élément correspondant. Ainsi, si une autre application que celle autorisée modifie la valeur, cela correspond à une erreur de programmation.

Dans un exemple de réalisation, la valeur d'au moins un élément compris dans chaque réplique 8 est une fonction d'une pluralité d'arguments de valeur. La fonction présente par exemple une somme, un produit ou une fraction des arguments de valeur.

Par exemple, chaque argument de valeur d'un élément ayant plusieurs arguments de valeur est un argument de valeur ou une valeur d'un autre élément. De ce fait, une valeur dont la fonction dépend de plusieurs arguments de valeur est déductible intégralement à partir d'éléments ayant chacun un argument de valeur unique. Notamment, les arguments de la valeur sont ré-calculables par une application 6 du groupe d'applications.

Un argument de valeur est par exemple une donnée provenant de l'un des capteurs 2 du système embarqué 4.

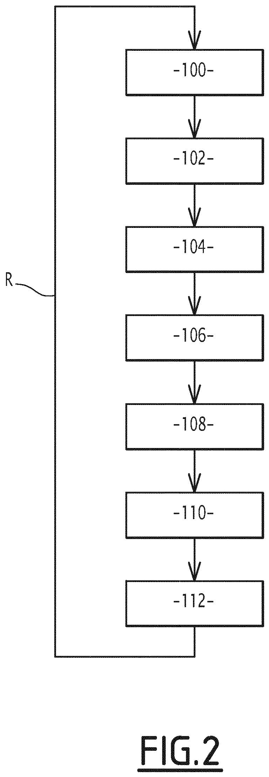

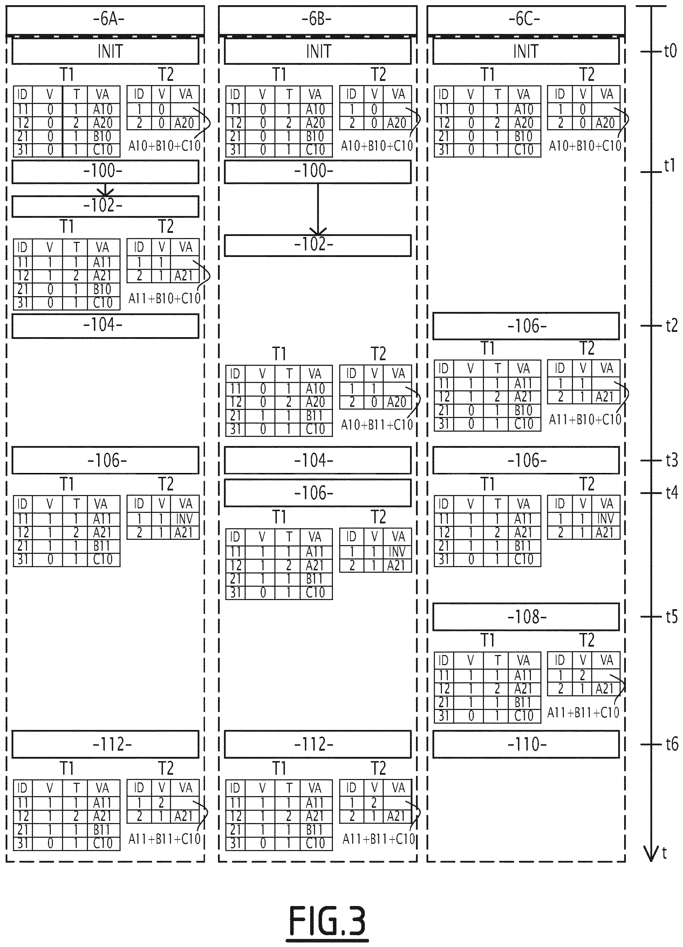

Un procédé de gestion de la base de données 9 partagée par le groupe d'applications sera maintenant décrit, en référence aux figures 2 et 3. Le procédé de gestion permet notamment de synchroniser les répliques 8 à l'aide de numéros de versions des éléments.

Le procédé de gestion est mis en œuvre par le système embarqué 4, et en particulier par les applications 6.

Le procédé de gestion comprend une étape de modification 100, une étape d'incrémentation 102, une étape de diffusion 104, une étape de synchronisation 106, une étape de correction 108, une étape de diffusion additionnelle 110 et une étape de synchronisation additionnelle 112.

Lors de l'initialisation du procédé de gestion, les répliques 8 sont identiques l'une par rapport à l'autre. Par « répliques identiques », il est entendu que le numéro de version et la valeur de chaque élément d'une réplique 8 est identique au numéro de version et à la valeur de cet élément dans les autres répliques 8.

Dans la figure 3, un exemple d'une mise en œuvre du procédé de gestion par trois applications 6A, 6B et 6C est illustré. Les applications 6A, 6B, 6C effectuent des étapes chronologiquement, en suivant la direction du temps indiquée par une flèche t. L'instant de l'initialisation du procédé est illustré par « INIT » à l'instant t0 dans la figure 3.

Chaque application 6A, 6B, 6C comprend un premier tableau T1 et un deuxième tableau T2. Dans le premier tableau T1 et le deuxième tableau T2, les éléments correspondent à des lignes. Le premier tableau T1 comprend quatre éléments et le deuxième tableau T2 comprend deux éléments. Chaque élément du premier tableau T1 comprend une identification ID, une version V, une information relative au type T et une valeur VA. Chaque élément du deuxième tableau T2 comprend une identification ID, une version V et une valeur VA. Notamment, les éléments du deuxième tableau T2 sont dépourvus d'information relative au type de l'élément.

Dans ce qui suit, les éléments sont désignés par leur identification ID, de manière suivante : élément « ID ». L'identification ID comprend par exemple un ou deux chiffres entiers. Par exemple, l'identification ID des éléments du premier tableau T1 comprend deux chiffres, dont le premier chiffre est relatif à l'application 6 autorisée à modifier cet élément, par exemple « 1 » pourl'application 6A, « 2 » pour l'application 6B et « 3 » pour l'application 6C. Dans l'exemple de la figure 3, l'application 6A est autorisée à modifier les éléments « 11 » et « 12 », l'application 6B est autorisée à modifier l'élément « 21 » et l'application 6C est autorisée à modifier l'élément « 31 ».

L'identification ID des éléments du deuxième tableau T1 comprend par exemple un chiffre entier.

La version V est par exemple un chiffre entier. Dans l'exemple de la figure 3, l'ensemble des éléments à l'instant t0 comprennent la version « 0 ».

Le type T est par exemple un chiffre entier. Dans l'exemple de la figure 3, les éléments présentent le type « 1 » ou « 2 ».

La valeur VA est une fonction comprenant un ou plusieurs arguments de valeur. Par exemple, les valeurs VA des éléments du premier tableau T1 sont des valeurs étant des fonctions ayant un argument de valeur unique. La fonction est notamment une fonction constante. Par exemple, l'argument de valeur de la fonction est égal à la valeur VA. La valeur VA de l'élément « 11 » est « A10 », la valeur VA de l'élément « 12 » est « A20 », la valeur VA de l'élément « 21 » est « B10 » et la valeur VA de l'élément « 31 » est « C10 ». Dans l'exemple, la valeur VA de l'élément « 1 » du deuxième tableau T2 est une fonction comprenant trois arguments de valeur, à savoir les arguments de valeur « A10 », « B10 » et « C10 » à l'instant t0. La valeur VA de l'élément « 2 » du deuxième tableau T2 est une fonction comprenant un argument de valeur unique, à savoir « A20 ».

Par exemple, les arguments de valeur d'un élément dépendent de la valeur VA de plusieurs éléments comprenant un argument de fonction unique. Dans l'exemple de la figure 3, les arguments de valeur de l'élément « 1 » sont les valeurs VA des éléments « 11 », « 21 », et « 31 ». Ainsi, la valeur VA de l'élément « 1 » dépend des valeurs VA des éléments « 11 », « 21 », et « 31 ».

Lors de l'étape de modification 100, une application 6 parmi la pluralité d'applications modifie la valeur d'au moins un élément dans sa réplique 8 de la base de données 9. Cette application 6 est appelée « application active » dans ce qui suit. L'élément dont la valeur est modifiée lors de l'étape de modification 100 est appelé « élément modifié » dans ce qui suit.

Selon un exemple, plusieurs applications 6 mettent en œuvre l'étape de modification 100 simultanément.

En référence à la figure 2, lors de l'étape d'incrémentation 102, l'application active incrémente le numéro de version de l'élément modifié ou des éléments modifiés. Par exemple, si le numéro de version est « 0 » lors de la mise en œuvre de l'étape de modification 100, l'application active passe le numéro de version de « 0 » à « 1 » de cet élément.

Un exemple des étapes de modification 100 et d'incrémentation 102 sera maintenant décrit en référence à la figure 3.

Les applications 6A et 6B sont des applications actives. Elles mettent en œuvre, à partir de l'instant t1, l'étape de modification 100 et l'étape d'incrémentation 102.

L'application 6A modifie la valeur VA de l'élément « 11 » de la valeur « A10 » à la valeur « A11 » et la valeur VA de l'élément « 12 » de la valeur « A20 » à la valeur « A21 ». L'application 6A modifie également les éléments « 1 » et « 2 » du deuxième tableau T2, comme la valeur VA de ces éléments dépend de la valeur VA des éléments du premier tableau T1. L'application 6A modifie alors la valeur VA de l'élément « 1 » de « A10+B10+C10 » à « A11+B10+C10 » pour tenir compte de la modification de la valeur de l'élément « 11 ». L'application modifie la valeur VA de l'élément « 2 » de « A20 » à « A21 » pour tenir compte de la modification de la valeur VA de l'élément « 12 ». L'application 6A incrémente en outre la version V des éléments « 11 », « 12 », « 1 » et « 2 » de la version « 0 » à la version « 1 ».

Pendant la mise en œuvre des étapes de modification 100 et d'incrémentation 102 par l'application 6A, l'application 6B met également en œuvre les étapes de modification 100 et d'incrémentation 102. L'application 6B modifie alors la valeur VA de l'élément « 21 » de la valeur B10 à la valeur B11 et incrémente la version V de cet élément de la version « 0 » à la version « 1 ».

En référence à la figure 2, lors de l'étape de diffusion 104, l'application active diffuse une donnée de transmission aux autres applications 6 du groupe d'applications. La donnée de transmission comprend l'élément modifié lors des étapes de modification 100 et d'incrémentation 102, et un numéro de version antérieure de cet élément modifié. Par « numéro de version antérieure », on entend le numéro de version de l'élément modifié avant la mise en œuvre des étapes de modification 100 et d'incrémentation 102.

Notamment, l'application active diffuse les modifications effectuées sur sa réplique 8 lors de l'étape de modification 100 et de l'étape d'incrémentation 102.

Lorsque plusieurs applications 6 mettent en œuvre l'étape de modification 100 simultanément, chaque application active diffuse une donnée de transmission aux autres applications lors de l'étape de diffusion 104, à la suite de la mise en œuvre des étapes de modification 100 et d'incrémentation 102.

Lors de l'étape de synchronisation 106, au moins une application 6 du groupe d'applications autre que l'application active met à jour sa réplique 8 de la base de données 9 en fonction d'une comparaison du numéro de version antérieure avec le numéro de version de l'élément modifié dans cette réplique 8.

De préférence, chaque application 6 autre que l'application active met en œuvre l'étape de synchronisation 106 lorsque cette application n'a pas de traitement en cours, tel qu'une modification d'un élément dans sa réplique 8.

Par exemple, pour une application 6 du groupe d'applications, si le numéro de version de l'élément modifié est incrémenté d'un entier par rapport au numéro de version antérieure, cette application 6 remplace la valeur de l'élément comprise dans la réplique 8 par la valeur de l'élément modifié comprise dans la donnée de transmission.

Selon un mode de réalisation, une application 6 autre que l'application active déclare l'élément modifié comme valide si le numéro de version antérieure est égal au numéro de version de cet élément dans sa réplique 8 de la base de données 9. De préférence, l'application 6 déclare l'élément modifié comme invalide dans le cas contraire. En particulier, si le numéro de version antérieure diffère du numéro de version de cet élément dans la réplique 8 de l'application 6, cette application 6 déclare l'élément comme invalide.

Par exemple, si l'élément est déclaré comme valide, l'application 6 remplace l'élément correspondant dans sa réplique 8 de la base de données 9 par l'élément modifié.

Par exemple, si l'élément est déclaré comme invalide, l'application 6 marque la valeur de cet élément comme invalide dans sa réplique 8 de la base de données 9.

Selon un mode de réalisation, si l'élément est déclaré comme invalide, l'application 6 change le numéro de version dudit élément par le numéro de version le plus élevé parmi le numéro de version dans sa réplique 8 de la base de données 9 et le numéro de version compris dans l'élément modifié compris dans la donnée de transmission.

Le changement du numéro de version au numéro le plus élevé permet de mémoriser la version la plus élevée, bien que la valeur ne soit pas valide. Ainsi, lors d'une éventuelle correction de la valeur, le numéro de version le plus élevé est connu pour l'application 6.

Un exemple des étapes de diffusion 104 et de synchronisation 106 sera maintenant décrit en référence à la figure 3.

L'application 6A met en œuvre l'étape de diffusion 104 à l'instant t2. L'application 6A diffuse alors la donnée de transmission aux autres applications 6B, 6C. Notamment, l'application 6A diffuse l'ensemble des éléments des tableaux T1 et T2 ou l'ensemble des éléments modifiées aux autres applications 6B, 6C.

L'application 6B a un traitement en cours à l'instant t2, à savoir la mise en œuvre des étapes de modification et d'incrémentation 100, 102. Ainsi, l'application 6B prend en compte la donnée de transmission uniquement à l'instant t4 à l'issue de son traitement.

L'application 6C n'a pas de traitement en cours à l'instant t2 et met ainsi en œuvre l'étape de synchronisation 106 pour synchroniser sa réplique 8 avec la donnée de transmission. La donnée de transmission comprend, pour les éléments « 11 », « 12 », « 1 » et « 2 » le numéro de version antérieure « 0 » et l'application 6C comprend dans sa réplique 8 également le numéro de version « 0 » pour ces éléments. L'application 6A considère ainsi ces éléments modifiés comme valable. L'application 6C remplace dans sa réplique 8 les valeurs VA et les versions V des éléments « 11 », « 12 », « 1 » et « 2 » conformément à la donnée de transmission.

Toujours en référence à l'exemple de la figure 3, lors de l'instant, t3 l'application 6B, ayant terminé son traitement, met en œuvre l'étape de diffusion 104 en diffusant aux applications 6A et 6C la donnée de transmission comprenant les éléments « 21 » et « 1 ».

Les applications 6A et 6C mettent en œuvre l'étape de synchronisation 106 à l'instant t3. La donnée de transmission comprend, pour les éléments « 21 » et « 1 » le numéro de version antérieure « 0 ». Le numéro de version de l'élément « 21 » est « 0 » dans les répliques 8 des applications 6A et 6C. Ainsi, les applications 6A et 6C replacent l'élément « 21 » dans leur réplique 8 par l'élément « 21 » compris dans la donnée de transmission.

Le numéro de version de l'élément « 1 » dans les répliques 8 des applications 6A et 6C est « 1 ». Le numéro de version antérieure de l'élément « 1 » est diffère donc du numéro de version de cet élément dans les répliques 8 des applications 6A et 6C. Les applications 6A et 6C déclarent ainsi l'élément « 1 » comme invalide dans leur répliques 8, indiqué par « INV » dans la figure 3.

A l'instant t4, l'application 6B met en œuvre l'étape de synchronisation 106 pour prendre en compte la donnée de transmission diffusée lors de l'instant t2 par l'application 6A. Il en résulte que l'application 6B déclare également comme invalide l'élément « 1 » dans sa réplique 8.

Lors de l'étape de correction 108, une application 6 du groupe d'applications calcule chaque partie de la valeur de l'élément déclaré comme invalide, en fonction de la donnée de transmission, pour obtenir un élément corrigé. L'application 6 mettant en œuvre l'étape de correction 108 est appelée « application de correction ».

Par exemple, l'application de correction applique une fonction de transfert à la valeur de l'élément déclaré comme invalide. La fonction de transfert dépend par exemple des arguments de valeur de l'élément déclaré comme invalide.

Selon un exemple, l'application de correction incrémente également le numéro de version déclaré comme invalide.

Lors de l'étape de diffusion additionnelle 110, l'application de correction diffuse l'élément corrigé aux autres applications 6 du groupe d'applications. Par exemple, l'application de correction diffuse une donnée de transmission comprenant l'élément corrigé.

Lors de l'étape de synchronisation additionnelle 112, les applications 6 autres que l'application de correction mettent à jour leur réplique 8 de la base de données 9 en fonction d'une comparaison du numéro de version antérieure avec le numéro de version dudit élément dans cette réplique 8.

Comme illustré par la boucle R visible dans l'exemple de la figure 2, le procédé de gestion est réitéré à la fin de l'étape de synchronisation additionnelle 112.

Un exemple des étapes de correction 108, de diffusion additionnelle 110 et de synchronisation additionnelle 112 sera maintenant décrit en référence à la figure 3.

L'application 6C est l'application prédéterminée pour la correction d'éléments invalides, dite application de correction. A l'instant t5, l'application 6C met en œuvre l'étape de correction 108 en calculant la valeur VA de l'élément « 1 », déclaré comme invalide. Notamment l'application 6C applique la fonction de transfert de l'élément « 1 » aux arguments de valeur de cet élément. L'application de correction 6C obtient ainsi la valeur « A11+B11+C10 » pour l'élément corrigé « 1 ». L'application 6C incrémente en outre le numéro de version de « 1 » à « 2 » de cet élément.

A l'instant t6, l'application 6C met en œuvre l'étape de diffusion additionnelle 110 en diffusant une donnée de transfert comprenant l'élément corrigé « 1 » aux autres applications 6A et 6B. Les applications 6A et 6B mettent en œuvre l'étape de synchronisation additionnelle 112 en mettant à jour leur réplique 8 de la base de données 9 en fonction d'une comparaison du numéro de version antérieure, ici la version « 1 » pour l'élément « 1 », avec le numéro de version dudit élément dans cette réplique 8, ici également version « 1 » pour l'élément « 1 ». Le numéro de version antérieure est ainsi égal au numéro de version dans les répliques 8 des applications 6A et 6B et ces applications remplacent l'élément « 1 » dans leur base de données 9 par l'élément « 1 » corrigée.

Un procédé de mise à jour sera maintenant décrit. Le procédé de mise à jour est mis en œuvre par le système embarqué 4. Le procédé de mise à jour permet notamment de corriger au moins un élément dans les répliques 8 de la base de données 9.

De préférence, le procédé de mise à jour ne nécessite pas de numéro de version des éléments. En particulier, les applications 6 ne prennent pas en compte le numéro de version.

Le procédé de mise à jour comprend une étape de réception 200, une étape de comparaison 202, une étape de détection 204, une étape de marquage 206, une étape de sélection 208, une étape de transmission 210, une étape de correction 212 et une étape de diffusion 214.

Lors de l'initialisation du procédé de mise à jour, les répliques 8 de la base de données 9 comprennent notamment au moins un élément comprenant au moins une valeur différente dans une réplique 8 par rapport à une autre réplique 8.

Lors de l'étape de réception 200, une application 6 du groupe d'applications reçoit au moins un élément de la pluralité d'éléments. L'application 6 recevant cet élément ou ces éléments est appelée application de traitement.

Lors de l'étape de comparaison 202, l'application de traitement compare la valeur de l'élément reçu avec la valeur de cet élément dans sa réplique 8 de base de données 9.

Notamment, lorsque la valeur de l'élément reçu est égale à la valeur de cet élément dans sa réplique 8, l'application de traitement ne modifie pas sa réplique 8.

Lorsque la valeur de l'élément reçu diffère de la valeur VA de cet élément dans la réplique 8 de la base de données 9 de l'application de traitement, cette application met en œuvre l'étape de détection 204 et l'étape de marquage 206.

Lors de l'étape de détection 204, l'application de traitement détecte une incohérence de la valeur de l'élément reçu par rapport à une valeur attendue de cet élément.

L'application de traitement détermine l'incohérence de la valeur conformément au fonctionnement du ou des systèmes embarqués 4.

Par exemple, la valeur est incohérente si la valeur dépend d'un ou plusieurs arguments de valeur obsolètes.

Par « argument de valeur obsolète », on entend par exemple que l'argument de valeur est mis à jour dans une réplique 8 différente de la réplique 8 de l'application de traitement. Par exemple, l'argument de valeur est mis à jour en fonction d'une donnée provenant du capteur 2.

L'argument de valeur obsolète reflète notamment un état passé du système embarqué 4. Ainsi, l'argument de valeur obsolète est caduque car des données fournies par le capteur 2 pour cet argument de valeur ont changées.

Notamment, la valeur VA est incohérente si au moins un argument de valeur relève d'un instant différent que les autres arguments de valeur de cette valeur.

La valeur VA est cohérente si l'ensemble des arguments de valeur correspondent à un même contexte temporel. Par exemple, la valeur VA est cohérente si l'ensemble des arguments de valeur correspondent aux données actuelles des capteurs 2 correspondants. La valeur attendue est notamment la valeur VA dont les arguments de valeur correspondent aux données actuelles des capteurs 2 pour chaque argument de valeur.

Selon un exemple, la valeur attendue est une valeur déterminée par calcul de la fonction de transfert qui dépend des arguments de valeur. Selon un autre exemple, la valeur attendue est une valeur pré-calculée.

Par exemple, la valeur attendue est déterminée en appliquant une fonction de transfert reproduisant le fonctionnement du système embarqué 4 à un argument de valeur. L'argument de valeur est en particulier une donnée provenant d'au moins un capteur 2 du système embarqué 4.

Selon un exemple, l'incohérence de la valeur est détectée par le numéro de version de l'élément.

L'incohérence de la valeur de l'élément reçu est ainsi détectée par l'application de traitement lors de l'étape de détection 204.

Lors de l'étape de marquage 206, l'application de traitement marque la valeur de l'élément reçu comme invalide. L'élément est appelé élément invalide.

La valeur marquée comme invalide est notamment une fonction des plusieurs arguments de valeur. Par exemple, chaque argument de valeur est associé à une application correspondante du groupe d'applications 6. Dans ce cas, l'argument de valeur associé à cette application est modifiable exclusivement par cette application 6.

Selon un exemple, la valeur marquée comme invalide d'au moins un élément est une fonction d'un argument unique.

Lors de l'étape de sélection 208, une application 6 est sélectionnée parmi la pluralité d'applications. L'application sélectionnée est l'application de correction. L'application de correction est par exemple sélectionnée en fonction d'un type d'élément invalide qui est à corriger.

Selon un exemple, l'application de correction est prédéterminée avant la mise en œuvre du procédé.

L'application de correction est par exemple sélectionnée en fonction d'une charge de travail de chaque application 6. Par exemple, l'application 6 ayant le moins de charge de calcul en cours parmi la pluralité d'applications est sélectionnée.

Par exemple, l'application de correction est l'application 6 présentant une durée d'attente minimale entre l'étape de marquage 206 et un instant dans lequel l'application 6 a les ressources de calcul disponibles pour effectuer l'étape de correction 212.

Par exemple, l'application de correction est l'application 6 ayant la fréquence d'activation la plus élevée parmi les applications 6. Ceci permet notamment de minimiser la durée d'invalidité de l'élément invalide. Par « fréquence d'activation », il est entendu le nombre de fois par seconde que l'application 6 est activée pour réaliser des calculs. Notamment, la fréquence d'activation correspond au temps d'attente jusqu'à la prochaine disponibilité de l'application correspondante. Par exemple, la durée maximale d'attente est égale au double de la période de la fréquence d'activation.

Selon un exemple, si l'application ayant la fréquence d'activation la plus élevée n'a pas des ressources de calcul suffisantes pour effectuer l'étape de correction 212, une application 6 ayant une fréquence d'activation moins élevée est choisie. De préférence, l'application 6 ayant la fréquence d'activation la plus élevée parmi les applications ayant des ressources de calcul suffisantes est choisie.

Lors de l'étape de transmission 210, l'application de traitement transmet l'élément invalide à au moins une autre application 6, notamment à l'application de correction.

Selon un exemple, l'application de traitement est distincte de l'application de correction.

Selon un autre exemple, l'application de traitement est l'application de correction. Dans un tel cas, l'étape de transmission 210 comprend par exemple une transmission interne au sein de l'application 6 figurant comme application de traitement et application de correction.

Lors de l'étape de correction 212, l'application de correction calcule la valeur de l'élément invalide. L'élément ainsi corrigé est appelé élément corrigé.

Par exemple, l'application de correction applique la fonction de transfert à la valeur de l'élément invalide pour obtenir une valeur corrigée de l'élément corrigé. La fonction de transfert dépend notamment de plusieurs arguments de transfert. Selon un exemple, chaque argument de transfert correspond à l'un des arguments de valeur, notamment provenant des capteurs 2.

La fonction de transfert reproduit le fonctionnement du système embarqué 4. Notamment, la fonction de transfert est configurée pour prendre en compte des données provenant des capteurs 2.

Si l'argument de valeur d'au moins un élément invalide est un argument unique, chaque application 6 redémarre lors de l'étape de correction 212. Notamment, lors du redémarrage, chaque application 6 initialise l'argument unique à un argument initial spécifique à chaque élément. Par exemple, chaque argument initial est l'argument de l'élément respectif à un état de la réplique 8 de la base de données 9 dans lequel l'ensemble des éléments est valide. Un tel argument initial est par exemple enregistré dans chaque réplique 8 de la base de données 9.

Lors de l'étape de diffusion 214, l'application de correction diffuse l'élément corrigé aux autres applications 6 du groupe d'applications.

En particulier, à la fin du procédé de mise à jour, les valeurs de l'ensemble des éléments sont valides.

Selon un exemple, le procédé de mise à jour comprend une ou plusieurs étapes du procédé de gestion. Par exemple, le procédé de mise à jour comprend au moins une étape parmi l'étape de modification 100, l'étape d'incrémentation 102, l'étape de diffusion 104, l'étape de synchronisation 106, l'étape de correction 108, l'étape de diffusion additionnelle 110 et l'étape de synchronisation additionnelle 112.

Selon un exemple, le procédé de gestion comprend une ou plusieurs étapes du procédé de mise à jour. Par exemple, le procédé de gestion comprend au moins une étape parmi l'étape de réception 200, l'étape de comparaison 202, l'étape de détection 204, l'étape de marquage 206, l'étape de sélection 208, l'étape de transmission 210, l'étape de correction 212 et l'étape de diffusion 214.

## Revendications

1. Procédé de gestion d'une base de données (9) partagée par un groupe d'applications (6), les applications (6) étant mises en œuvre par un ou plusieurs systèmes embarqués (4), la base de données (9) comprenant des éléments, chaque élément comprenant une valeur (VA) et un numéro de version (V), chaque application (6) comprenant une réplique (8) de la base de données (9), les répliques (8) étant identiques lors de l'initialisation du procédé, le procédé comprenant :
- une étape de modification (100) de la valeur (VA) d'au moins un élément dans la réplique (8) de la base de données (9) d'une application (6), dite application active, du groupe d'applications ;
- une étape d'incrémentation (102) du numéro de version (V) dudit élément dans la réplique (8) de la base de données (9) de l'application active ;
- une étape de diffusion (104) lors de laquelle l'application active diffuse une donnée de transmission aux autres applications (6) du groupe d'applications, la donnée de transmission comprenant l'élément modifié lors des étapes de modification (100) et d'incrémentation (102), et un numéro de version antérieure de cet élément modifié, le numéro de version antérieure étant le numéro de version (V) de cet élément avant la mise en œuvre des étapes de modification (100) et d'incrémentation (102) ;
- une étape de synchronisation (106), lors de laquelle au moins une application (6) du groupe d'applications autre que l'application active met à jour sa réplique (8) de la base de données (9) en fonction d'une comparaison du numéro de version antérieure avec le numéro de version (V) dudit élément dans cette réplique (8).

2. Procédé de gestion selon la revendication 1, dans lequel, lors de l'étape de synchronisation (106), une application (6) autre que l'application active déclare l'élément modifié comme valide si le numéro de version antérieure est égal au numéro de version (V) de cet élément dans sa réplique (8) de la base de données (9), l'application (6) déclarant l'élément modifié comme invalide dans le cas contraire.

3. Procédé de gestion selon la revendication 2, dans lequel ladite application (6) remplace l'élément correspondant dans sa réplique (8) de la base de données (9) par l'élément modifié si cet élément modifié est déclaré comme valide.

4. Procédé de gestion selon la revendication 2 ou 3, dans lequel, lorsque l'élément est déclaré comme invalide, ladite application (6) marque la valeur dudit élément comme invalide dans sa réplique (8) de la base de données (9).

5. Procédé de gestion selon l'une quelconque des revendications 2 à 4, dans lequel, lorsque l'élément est déclaré comme invalide, l'application (6) change le numéro de version dudit élément par le numéro de version le plus élevé parmi le numéro de version dans sa réplique (8) de la base de données (9) et le numéro de version compris dans l'élément modifié compris dans la donnée de transmission.

6. Procédé de gestion selon l'une quelconque des revendications 2 à 5, comprenant une étape de correction (108) lors de laquelle une application (6) du groupe d'applications, dite application de correction, calcule la valeur (VA) de l'élément déclaré comme invalide pour obtenir au moins un élément corrigé.

7. Procédé de gestion selon la revendication 6, comprenant en outre une étape de diffusion additionnelle (110) de l'élément corrigé par l'application de correction aux autres applications (6) du groupe d'applications.

8. Procédé de gestion selon l'une quelconque des revendications précédentes, dans lequel chaque réplique (8) de la base de données (9) est exclusivement modifiable par l'application (6) comprenant cette réplique (8).

9. Procédé de gestion selon l'une quelconque des revendications précédentes, dans lequel l'étape de modification (100) est mise en œuvre, pour un élément prédéterminé, par une unique application (6) prédéterminée du groupe d'applications.

10. Procédé de gestion selon l'une quelconque des revendications précédentes, dans lequel la valeur (VA) d'au moins un élément compris dans chaque réplique (8) de la base de données (9) est une fonction d'une pluralité d'arguments de valeur.

11. Procédé de gestion selon la revendication 10, dans lequel, lors de l'étape de modification (100), l'application active modifie un argument de valeur de la pluralité d'arguments de valeur, cet argument de valeur étant associé à l'application active.

12. Produit programme d'ordinateur comportant des instructions logicielles qui, lorsque mises en œuvre par un équipement informatique, mettent en œuvre le procédé de gestion selon l'une quelconque des revendications précédentes.

13. Système embarqué (4) de gestion de base de données (9) partagée par un groupe d'applications (6), les applications (6) étant configurées pour être mises en œuvre par le système embarqué (4), la base de données (9) comprenant des éléments, chaque élément comprenant une valeur (VA) et un numéro de version (V), chaque application (6) comprenant une réplique (8) de la base de données (9), les répliques (8) étant identiques lors de l'initialisation du système embarqué (4),
dans lequel une application (6), dite application active, du groupe d'applications est configurée pour modifier la valeur (VA) d'au moins un élément dans sa réplique (8) de la base de données (9) ;
dans lequel l'application active est configurée pour incrémenter le numéro de version (V) dudit élément dans sa réplique (8) de la base de données (9) ;
dans lequel l'application active est configurée pour diffuser une donnée de transmission aux autres applications (6) du groupe d'applications, la donnée de transmission comprenant l'élément modifié et incrémenté, et un numéro de version antérieure de cet élément, le numéro de version antérieure étant le numéro de version (V) de cet élément avant sa modification et son incrémentation ; et
dans lequel au moins une application (6) du groupe d'applications autre que l'application active est configurée pour mettre à jour sa réplique (8) de la base de données (9) en fonction d'une comparaison du numéro de version antérieure avec le numéro de version (V) dudit élément dans cette réplique (8).
